# EUROPÄISCHE PATENTSCHRIFT

(11) **EP 1 144 886 B1**
(45) Veröffentlichungstag und Bekanntmachung des Hinweises auf die Patenterteilung: **25.09.2002**
(21) Anmeldenummer: 99932806.5
(22) Anmeldetag: 03.07.1999
(51) Int. Cl.: F16H 61/00, B60K 41/02

(54) **VERFAHREN UND VORRICHTUNG ZUR BETÄTIGUNG EINER KRAFTFAHRZEUG-KUPPLUNGSVORRICHTUNG**
METHOD AND DEVICE FOR ACTUATING A MOTOR VEHICLE CLUTCH DEVICE
PROCEDE ET DISPOSITIF SERVANT A COMMANDER L'EMBRAYAGE D'UN VEHICULE AUTOMOBILE

(30) Priorität: 10.07.1998 DE 19830950
(43) Veröffentlichungstag der Anmeldung: 17.10.2001
(73) Patentinhaber: ZF FRIEDRICHSHAFEN Aktiengesellschaft, 88038 Friedrichshafen (DE)
(72) Erfinder: GOEBEL, Christoph, D-88090 Immenstaad (DE); BAILLY, Gerhard, D-88046 Friedrichshafen (DE); SPIESS, Martin, D-88690 Uhldingen (DE); PROBST, Willibald, D-88239 Wangen (DE); RUMPF, Oliver, D-81925 München (DE)
(86) Internationale Anmeldenummer: EP9904634
(87) Internationale Veröffentlichungsnummer: WO00003159

(56) Entgegenhaltungen:
- EP-A- 0 918 175
- DE-A- 19 522 833
- US-A- 4 651 142
- PATENT ABSTRACTS OF JAPAN vol. 199, no. 707, 31. Juli 1997 (1997-07-31) & JP 09 074609 A (TOYOTA), 18. März 1997 (1997-03-18)
- PATENT ABSTRACTS OF JAPAN vol. 7, no. 217 (M-245), 27. September 1983 (1983-09-27) & JP 58 112826 A (AISHIN WARNER), 5. Juli 1983 (1983-07-05)

## Beschreibung

Die Erfindung betrifft ein Verfahren und eine Vorrichtung zur Betätigung einer Kraftfahrzeug-Kupplungsvorrichtung und zur Steuerung oder Regelung des übertragbaren Antriebsdrehmoments und der Reibleistung der Kupplungsvorrichtung, insbesondere einer Wendekupplungsvorrichtung, die in einem Fahrantriebsstrang angeordnet ist, der ein Getriebe mit stufenlos variabler Übersetzung enthält, gemäß dem Oberbegriff von Anspruch 1.

Die JP 09 074609 A offenbart die Merkmale der Oberbegriffs des Anspruchs 1.

Ein hydrostatisch-mechanisches Leistungsverzweigungsgetriebe mit stufenlos variabler Übersetzung und einer Wendekupplungsvorrichtung bestehend aus einer Lamellenkupplung für Vorwärtsfahrt und einer Lamellenkupplung für Rückwärtsfahrt am Getriebeausgang ist aus der WO 97/01049 bekannt. Durch alternative Verwendung der beiden Kupplungen K_{V} und K_{R} kann die Fahrrichtung des Fahrzeuges bei kleinen Geschwindigkeiten reversiert werden. Dies bedeutet beispielsweise, daß die Kupplung K_{R} bereits druckmoduliert geschlossen wird, wenn sich das Fahrzeug noch vorwärts bewegt. Ab einem bestimmten Modulationsdruck wird die bisher geschlossene Kupplung K_{V} geöffnet und das sich vorwärts bewegende Fahrzeug über die Kupplung K_{R} bis zum Stillstand abgebremst und anschließend in Rückwärtsfahrrichtung beschleunigt. Die aktuell eingestellte Getriebeübersetzung bleibt während des Reversiervorganges konstant. Sie wird erst wieder verändert, nachdem die Reversierung über die Kupplungen K_{V} und K_{R} abgeschlossen ist. Dadurch sind schnelle Wendeschaltungen ohne Zugkraftunterbrechung des Fahrantriebsstranges mit großem Schaltkomfort erzielbar.

Die Erfindung ist mit dem bekannten Leistungsverzweigungsgetriebe realisierbar und insbesondere, jedoch nicht ausschließlich, für landwirtschaftlich genutzte Fahrzeuge wie beispielsweise Ackerschlepper und andere Traktoren verwendbar.

Das von einer Kupplung übertragbare Fahrantriebsmoment ist bei Kupplungs-Rutschbetrieb von der Einstellung eines Kraftfahrzeug-Kupplungspedals und von der Beschaffenheit der Fahrbahn abhängig. Die sogenannte Inchfunktion (Möglichkeit des Rutschbetriebes der Kupplung) ermöglicht die stufenlose Variation des von der Kupplung, im vorliegenden Beispiel der Wendekupplungsvorrichtung, übertragbaren Fahrantriebsmoments durch den Fahrer anhand der Kupplungspedalstellung. Die dosierte Begrenzung des Fahrantriebsmoments ist im praktischen Einsatz des Kraftfahrzeuges unbedingt notwendig, beispielsweise beim Anfahren auf rutschigem Untergrund oder beim Andocken an andere Geräte.

Über einen Drehwinkelsensor am Kupplungspedal oder an einem separaten Inchpedal wird eine der Pedalstellung entsprechende Spannung erzeugt und in einem elektronischen Steuergerät verarbeitet. Diese Spannung wird über eine Inchpedal-Kennlinie in den Incheffekt gewandelt, welcher zwischen 0 % und 100 % liegt. 100-%-Incheffekt bedeutet hierbei geöffnete Wendekupplungsvorrichtung und 0-%-Incheffekt bedeutet geschlossene Wendekupplungsvorrichtung und damit auch geschlossener Fahrantriebsstrang.

Entsprechend des Incheffektes wird, wie bei bekannten Schleppergetrieben, der Kupplungsdruck und damit das maximal übertragbare Fahrantriebsmoment zwischen 0 bar und einem Maximalwert von beispielsweise 18 bar eingestellt. In Abhängigkeit von Motordrehzahl, eingestellter Getriebeübersetzung und dem abgenommenen Fahrantriebsmoment auf der Abtriebsseite der Wendekupplungsvorrichtung würde sich wie bei den bekannten Schleppergetrieben eine mehr oder weniger große Drehzahldifferenz über der Wendekupplungsvorrichtung (Durchtriebsgrad) einstellen. Dabei ist der eingestellte Kupplungsdruck und die Differenzdrehzahl zwischen Antriebsseite und Abtriebsseite der Wendekupplungsvorrichtung ein Maß für die auftretende Reibleistung in der Wendekupplungsvorrichtung.

Bei den bekannten Getrieben sind die Wendekupplungen nicht für größere Dauerbelastungen dimensioniert, so daß sie bei Dauerbetrieb mit Inchfunktion verbrennen würden. Um Dauerbetrieb mit rutschenden Kupplungen bei allen Fahrgeschwindigkeiten zu ermöglichen, sind neue Verfahren nötig, um die Inchfunktion ohne Einschränkungen benutzen zu können und gleichzeitig die Kupplungen zu schützen.

Durch die Erfindung soll die Aufgabe gelöst werden, für einen Fahrantriebsstrang, welcher ein Getriebe mit stufenlos variabler Übersetzung und eine im Schlupfbetrieb verwendbare Kupplungsvorrichtung enthält, eine preiswerte Möglichkeit zu schaffen, die Kupplungsvorrichtung längere Zeit im Reibungs-Schlupfbetrieb betreiben zu können als bei bekannten Antriebsanlagen, ohne daß die Reibelemente der Kupplung verbrennen oder eine besonders überdimensionierte Kupplung erforderlich ist.

Diese Aufgabe wird gemäß der Erfindung durch die kennzeichnenden Merkmale von Anspruch 1 gelöst.

Weitere Merkmale der Erfindung sind in den anderen Ansprüchen enthalten.

Ein wesentlicher Gedanke der Erfindung besteht darin, eine zu hohe Reibleistung oder Überhitzung der Kupplungsvorrichtung nicht, oder nicht nur, durch Verändern des Kupplungsschließdruckes und/oder der Rutschzeit beim Öffnen und/oder Schließen der Kupplungsvorrichtung zu vermeiden, sondern durch eine vorbestimmte automatische Begrenzung, Steuerung oder Regelung der Drehzahldifferenz zwischen der Antriebsseite und der Abtriebsseite der Kupplungsvorrichtung durch eine entsprechende Steuerung oder Regelung der Übersetzung des Getriebes oder der Drehzahl des Fahrantriebsmotors in Abhängigkeit von einem vorbestimmten parametrierbaren Wert oder in Abhängigkeit von einem parametrierten Wertebereich oder in Abhängigkeit von der Temperatur und/oder von der Reibleistung der Kupplungsvorrichtung zu erreichen. Bei dieser Erfindung wird die Differenzdrehzahl der Kupplungsvorrichtung durch Variieren der Getriebeübersetzung im Inchbetrieb moduliert. Bei Traktoren oder anderen Arbeitsmaschinen werden häufig konstante, sogenannte PTO-Motordrehzahlen abverlangt, so daß sich das notwendige Variieren der Motordrehzahl ausschließt. Die Reibleistung kann auf verschiedene Weise gemessen oder durch eine elektronische Steuereinrichtung berechnet werden. Die automatische Berechnung kann erfolgen in Abhängigkeit von der Drehzahldifferenz zwischen der Antriebsseite und der Abtriebsseite der Kupplungsvorrichtung, vom Kupplungsschließdruck und/oder von dem von der Kupplungsvorrichtung übertragenen Drehmoment.

Die Erfindung wird im folgenden mit Bezug auf die Zeichnungen anhand von bevorzugten Ausführungsformen als Beispiele beschrieben. In den Zeichnungen zeigen:
- Fig. 1: schematisch einen Kraftfahrzeug-Antriebsstrang nach der Erfindung;
- Fig. 2: schematisch ein Schaltbild einer Reglerschaltung für die Inchfunktion;
- Fig. 3: ein Diagramm, welches den quantitativen Verlauf einer Inchkennlinie zeigt, wobei auf der horizontalen Achse der Incheffekt in Prozent und auf der vertikalen Achse die Soll-Drehzahldifferenz Delta-n_{WK} zwischen der Antriebsseite und der Abtriebsseite einer Kupplung der Wendekupplungsvorrichtung aufgetragen ist;
- Fig. 4: zwei übereinander angeordnete, zusammengehörende Diagramme, wobei im oberen Diagramm der Incheffekt in Abhängigkeit von der Zeit und im unteren Diagramm Drehzahlen in Abhängigkeit von der Zeit dargestellt sind und
- Fig. 5: ein Diagramm, welches den quantitativen Verlauf des Inchdruckes zeigt, wobei auf der horizontalen Achse der Incheffekt in Prozent und auf der vertikalen Achse der zugehörige Kupplungs-Betätigungsdruck aufgetragen sind.

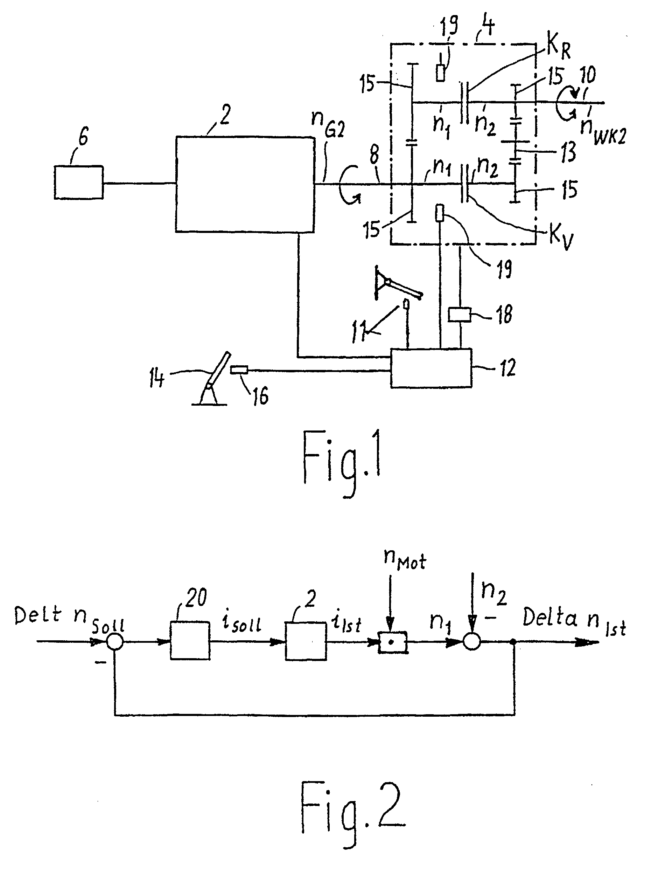

Der in Fig. 1 dargestellte Antriebsstrang eines Kraftfahrzeuges enthält ein Getriebe 2, welches eine stufenlos variierbare Übersetzung aufweist, und eine Wendekupplungsvorrichtung 4 am Getriebeausgang. Das Getriebe 2 mit automatisch stufenlos variierbarer Übersetzung kann Zahnräder oder andere Rotationselemente zur Erzeugung einer entsprechenden Übersetzung oder Untersetzung zwischen der Antriebsseite und der Abtriebsseite des Getriebes aufweisen. Der Getriebeeingang ist an einen Fahrantriebsmotor 6 angeschlossen. Die Wendekupplungsvorrichtung 4 enthält eine Kupplung Kᵥ für Vorwärtsfahrt und eine weitere Kupplung K_{R} für Rückwärtsfahrt. Beide Kupplungen Kᵥ und K_{R} sind hydraulisch betätigbare Lamellenkupplungen. Die Kupplungseingangswelle 8 ist an den Ausgang des Getriebes 2 angeschlossen und dreht sich mit dessen Drehzahl n_{G2}. Die Kupplungsausgangswelle 10 ist mit nicht dargestellten Fahrzeugrädern antriebsmäßig verbunden und dreht sich mit einer Drehzahl n_{wk2} in der einen oder anderen Drehrichtung, je nach dem, ob die Kupplung Kᵥ für Vorwärtsfahrt oder die Kupplung K_{R} für Rückwärtsfahrt geschlossen ist. Wenn vom Fahrer an einer Wählvorrichtung 11 einer elektronischen Steuereinrichtung 12 eine Fahrtrichtungsumkehr gewählt wird, bevor das Fahrzeug steht, haben während einer Übergangsphase beide Kupplungen Kᵥ und K_{R} Reibungs-Schlupf, wie dies eingangs für das Leistungsverzweigungsgetriebe der WO 97/01049 beschrieben wurde.

Zur Drehrichtungsumkehr der Kupplungsausgangswelle 10 ist im Wendegetriebestrang der einen Kupplung K_{V} ein Zahnrad 13 mehr angeordnet als im Wendegetriebestrang der anderen Kupplung K_{R}. Die anderen Zahnräder sind mit 15 bezeichnet.

Die beiden Kupplungen K_{V} und K_{R} der Wendekupplungsvorrichtung 4 werden von der elektronischen Steuereinrichtung 12 in Abhängigkeit von einem Kupplungspedal 14, dessen Stellung von einem Sensor 16 der elektronischen Steuereinrichtung 12 mitgeteilt wird, und in Abhängigkeit von einer Fahrrichtungsänderung an der Wählvorrichtung 11 gesteuert oder geregelt. Hierbei steuert die elektronische Steuereinrichtung 12 die Hydraulikflüssigkeit einer Hydraulikvorrichtung 18, mit welcher die Kupplungen K_{V} und K_{R} entgegen einer Federkraft betätigbar sind.

Die Steuereinrichtung 12 erhält durch Sensoren 19 Daten, z. B. Temperatur, Drehmoment, Betätigungsdruck und/oder Kupplungsdrehzahlen antriebsseitig n₁ und abtriebsseitig n₂, von der Kupplungsvorrichtung 4. Ferner ist die Steuereinrichtung 12 mit dem Getriebe 2 steuerungsmäßig verbunden.

Damit die Kupplungen K_{V} und K_{R} über längere Zeit oder in Dauerbetrieb mit Reibungs-Schlupf in Abhängigkeit von der Stellung des Kupplungspedals 14 durch den Fahrer betrieben werden können, ohne daß ihre Kupplungs-Reibungselemente verbrennen, sind in der elektronischen Steuereinrichtung 12 Maßnahmen vorgesehen, durch welche die Übersetzung des Getriebes 2 in Abhängigkeit von der Reibleistung oder der Temperatur in diesen Kupplungen automatisch und stufenlos so eingestellt wird, daß die Reibleistung vorbestimmte Werte oder Wertebereiche nicht überschreitet. Die elektronische Steuereinrichtung stellt das Übersetzungsverhältnis des Getriebes 2 automatisch so ein, daß die Drehzahldifferenz zwischen der Antriebsdrehzahl n₁ und der Abtriebsdrehzahl n₂ der betreffenden Kupplung K_{V} und/oder K_{R} auf einen bestimmten Maximalwert beschränkt wird oder auf einem vorbestimmten Wert gehalten wird, um die Reibleistung und damit die Temperatur einer der beiden Kupplungen K_{V} und/oder K_{R} zu begrenzen. In der elektronischen Steuereinrichtung 12 können entsprechende Sollwerte oder Sollwertkurven gespeichert oder durch ein Computerprogramm vorgebbar sein.

Fig. 2 zeigt ein Regelungsschema, das in der elektronischen Steuereinrichtung 12 realisiert ist. In Abhängigkeit von der genannten jeweiligen Stellung des Kupplungspedals 14 und gespeicherten Sollwerten oder Sollwertbereichen ergibt sich eine bestimmte Soll-Differenzdrehzahl Deltan_{Soll}. Ein Regler 20 erzeugt einen Sollwert i_{Soll} für die Übersetzung des Getriebes 2. Der Übersetzungs-Istwert i_{Ist} des Getriebes 2 ergibt in Abhängigkeit von der Drehzahl n_{Mot} des Fahrantriebsmotors 6 die Eingangsdrehzahl n₁ der betreffenden Kupplung K_{V} und/oder K_{R}. Das Differenz-Signal aus der Ist-Drehzahldifferenz Delta-n_{Ist} und der Soll-Drehzahldifferenz Delta-n_{Soll} wird als Regelabweichung dem Regler 20 zugeführt.

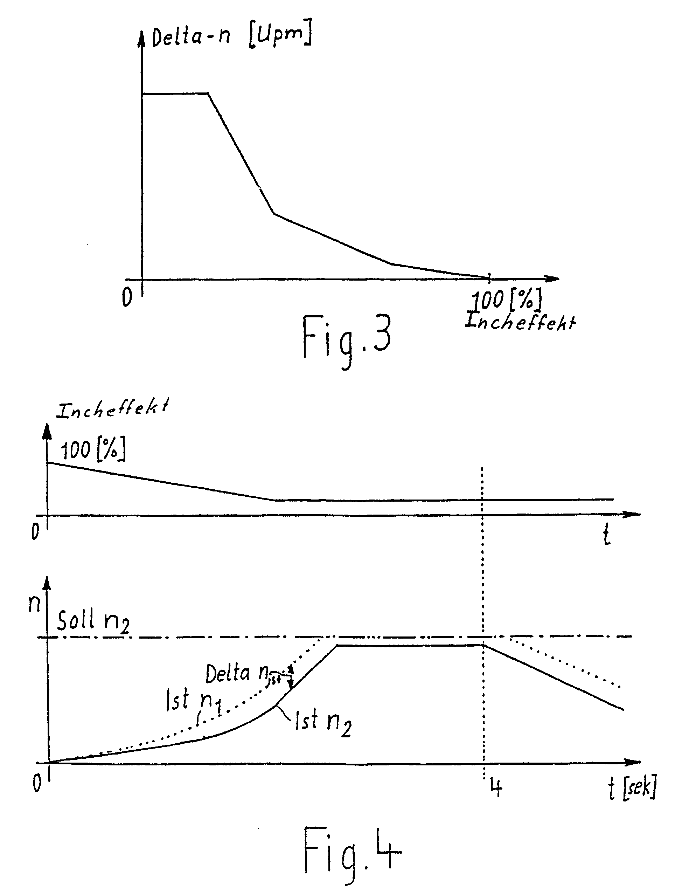

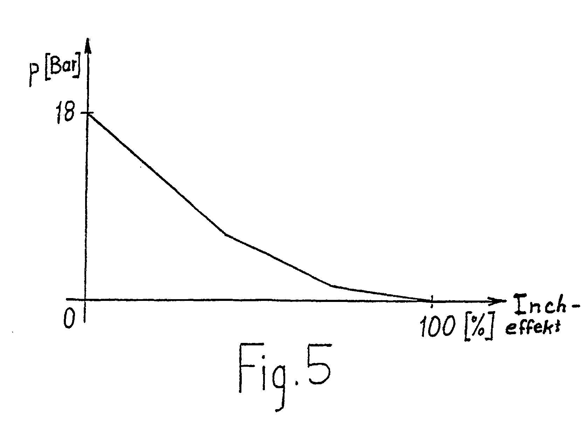

Nachfolgend werden drei verschiedene Verfahrensbeispiele beschrieben:
1. Variation der Getriebeübersetzung zur Begrenzung der Drehzahldifferenz in Abhängigkeit der Kupplungspedalstellung
   Die stufenlose Übersetzung des Getriebes 2 wird bei Betrieb mit Incheffekt so eingestellt, daß eine parametrierbare maximale Drehzahldifferenz an der betreffenden Kupplung K_{V} und/oder K_{R} der Wendekupplungsvorrichtung 4 nicht überschritten wird. Die maximale Drehzahldifferenz an der betreffenden Kupplung K_{V} und/oder K_{R} der Wendekupplungsvorrichtung 4 wird über eine Kennlinie in Abhängigkeit vom Incheffekt parametriert, wie dies beispielsweise in Fig. 3 dargestellt ist.
   Fig. 3 zeigt auf der horizontalen Achse den Incheffekt in Prozent und auf der vertikalen Achse die Soll-Drehzahldifferenz n₁-n₂, angegeben in Delta-n(Upm), zwischen der Antriebsseite und der Abtriebsseite der betreffenden Kupplung K_{V} oder K_{R}. Bei voll durchgedrücktem Kupplungspedal 14, was dem maximalen Incheffekt entspricht, wird vorzugsweise die Drehzahldifferenz Null vorgegeben, um ein Wegrollen oder Wegschleichen des Fahrzeuges aufgrund eines Restschleppmoments an der Kupplung zu verhindern. Ein dosiertes Anfahren des Kraftfahrzeuges wird unterstützt, indem bei stark gedrücktem Kupplungspedal 14 nur eine kleine Drehzahldifferenz n₁-n₂ zugelassen wird. Diese Drehzahldifferenz steigt dann um so mehr an, je weiter das Kupplungspedal 14 losgelassen wird und wird auf die maximal zulässige Drehzahldifferenz begrenzt.
   Bei einem Beschleunigungsvorgang oder einem Verzögerungsvorgang des Kraftfahrzeuges bei Inchbetrieb darf die Drehzahldifferenz n₁-n₂ die maximal zulässige Drehzahldifferenz nicht überschreiten. Dies wird dadurch erreicht, daß die Getriebeübersetzung mit dem Ziel der Sollübersetzung nur in dem Maße verstellt wird, daß die zulässige Drehzahldifferenz nicht überschritten wird. Die Übersetzung des Antriebsstranges setzt sich zusammen aus der Übersetzung des Getriebes 2 und der Übersetzung in der Wendekupplungsvorrichtung 4. Wenn die Übersetzung in dem Getriebe 2 ihren Sollwert erreicht hat, dann bestimmt der Schlupf in der betreffenden Kupplung K_{V} oder K_{R} die Abweichung von der Getriebe-Soll-Übersetzung. Ist die Zielübersetzung erreicht, stellt sich bei ausreichendem Kupplungsdruck an der kraftübertragenden Kupplung die Differenzdrehzahl Null ein. Wenn das Fahrzeug durch äußere Einflüsse (Veränderung der Fahrbahn) beschleunigt oder verzögert wird, dann wird mit der Differenzdrehzahl n₁-n₂ hinterher synchronisiert. Ein Beispiel hierzu ist in Fig. 4 gezeigt.
   Das obere Diagramm von Fig. 4 zeigt den Incheffekt in Abhängigkeit von der Zeit. Auf der horizontalen Achse ist die Zeit t und auf der vertikalen Achse ist der Incheffekt in Prozent aufgetragen.
   Im unteren Diagramm von Fig. 4 ist auf der horizontalen Achse die Zeit t und auf der vertikalen Achse die Drehzahl n aufgetragen. Eine strichpunktierte Linie parallel zur Zeitachse t stellt den Sollwert Soll-n₂ der Abtriebsdrehzahl einer der beiden Kuplungen K_{V} oder K_{R} dar. Eine in durchgezogener Linie dargestellte Kurve entspricht dem Istwert Ist-n₂ der Abtriebsdrehzahl dieser Kupplung K_{V} oder K_{R.} Sie liegt um einen Betrag Delta-n_{1-2IST} niedriger als die in punktierter Linie eingetragene Istwertkurve Ist-n₁ der antriebsseitigen Drehzahl dieser Kupplung K_{V} oder K_{R}, bedingt durch den Incheffekt des oberen Diagramms von Fig. 4. Wenn man eine mögliche Getriebeübersetzung in der Wendekupplungsvorrichtung 4 vernachlässigt, dann entspricht die punktierte Linie Ist-n₁ gleichzeitig der Abtriebsdrehzahl n_{G2} des stufenlos variablen Getriebes 2.
   In Fig. 4 ist angenommen, daß bei der Zeit t = 4 sec eine große Last auf der Abtriebsseite der Wendekupplungsvorrichtung 4 auftritt.
   Um die maximale Drehzahldifferenz einzuhalten, wird die Getriebeübersetzung nachgeführt.
2. Begrenzen der Differenzdrehzahl der Kupplungen K_{V} und K_{R} auf einen festen Grenzwert
   Die Inchfunktion wird überwiegend bei kleinen Geschwindigkeiten benötigt. Bis zu einer Grenzgeschwindigkeit gibt es keine Unterschiede bei der hier beschriebenen Inchfunktion gegenüber den bekannten Schleppergetrieben. Das bedeutet, daß die Sollübersetzung vom stufenlosen Getriebe eingestellt wird und der über das Kupplungspedal geforderte Druck an der Kupplung K_{V}/K_{R} eingestellt wird. Die Grenzgeschwindigkeit wird durch die maximal zulässige Differenzdrehzahl der betreffenden Wendekupplung K_{V} und/oder K_{R} bestimmt, welche die Wendekupplung dauerhaft verträgt. Gemäß der Erfindung wird die stufenlose Übersetzung des Getriebes 2 im Inchbetrieb anhand der Übersetzungsanforderung so eingestellt, daß eine parametrierbare Grenzübersetzung und damit eine parametrierbare Grenzgeschwindigkeit des Kraftfahrzeuges nicht überschritten wird. Bei Übersetzungen oder Übersetzungsanforderungen im Inchbetrieb, welche über diesem Grenzwert liegen, wird die Drehzahldifferenz der Kupplung auf einen Grenzwert begrenzt und die Übersetzung des Getriebes 2 entsprechend variiert.
3. Überwachung der Reibleistung der Wendekupplungen K_{V} und K_{R}

Gemäß dieser Variante der Erfindung wird im Inchbetrieb mit Hilfe der Differenzdrehzahl zwischen der Antriebsseite und der Abtriebsseite der Kupplungen K_{V} und/oder K_{R}, dem Kupplungsbetätigungsdruck und physikalischen Konstanten dieser Kupplungen laufend die Reibleistung der Kupplungen bestimmt. Eine weitere Möglichkeit besteht darin, die Temperatur der Kupplungen mit einem Temperatursensor zu erfassen.

Wenn die Reibleistung oder Temperatur einer dieser Kupplungen K_{V} und/oder K_{R} einen parametrierbaren Grenzwert überschreitet, dann werden Maßnahmen zum Schutz der betreffenden Kupplung unternommen. Durch diese Maßnahme soll der aktuelle Fahrzustand des Fahrzeuges möglichst nicht beeinträchtigt werden. Eine solche Maßnahme kann darin bestehen, den Kupplungsdruck leicht anzuheben, um den Schlupf in der Kupplung zu verringern. Wenn diese Maßnahme keine Wirkung zeigt, dann muß die Übersetzung des Getriebes 2 so nachgeführt werden, daß die Drehzahldifferenz zwischen der Antriebsseite und der Abtriebsseite der betreffenden Kupplung verringert und dadurch ihre Reibleistung gesenkt wird.

Im folgenden wird die Wendekupplungsvorrichtung 4 näher beschrieben:

Allgemein:

Die auf der Abtriebsseite des stufenlos variablen Getriebes 2 angeordnete Wendekupplungsvorrichtung 4 ermöglicht das Trennen des Kraftflusses zwischen diesem Getriebe 2 und dem Abtrieb des Fahrantriebsstranges. Dadurch kann das Getriebe 2 ohne Auswirkungen auf den Abtrieb des Fahrantriebsstranges verstellt werden, beispielsweise um eine bestimmte Übersetzung einzustellen.

Zuschalten und Abschalten der beiden Wendekupplungen K_{V} und K_{R}:

Das Zuschalten und Abschalten dieser Kupplungen K_{V} und K_{R} wird von einem Zustands-Automaten der elektronischen Steuereinrichtung 12 gesteuert. Er generiert die Steuerbefehle für die Kupplungen in Abhängigkeit vom aktuellen Fahrzustand und von gewünschten Fahrzuständen. Diese Steuerbefehle leiten jeweils verschiedene Vorgänge ein, beispielsweise das Befüllen oder Schließen der Kupplungen.

Modulation des Kupplungsdruckes in den Wendekupplungen K_{V} und K_{R}:

Der Druck und dadurch auch das maximal übertragbare Drehmoment in diesen Kupplungen wird stufenlos zwischen 0 bar und einem Höchstwert von beispielsweise 18 bar moduliert. Diese Modulation erfolgt abhängig von der momentanen Fahrsituation. Bei bestimmten Fahrsituationen wird der erforderliche Druck direkt aus Eingangssignalen der elektronsichen Steuereinrichtung 12 abgeleitet, bei Inchbetrieb beispielsweise aus dem Incheffekt und damit aus der Stellung des Kupplungspedals 14.

Fig. 5 zeigt die Abhängigkeit des Betätigungsdruckes der Kupplungen in bar von dem Incheffekt, welcher auf der horizontalen Achse in Prozent aufgetragen ist. Die Kurve zeigt den quantitativen Verlauf des Inchdruckes.

Bei anderen Fahrzuständen wird der Soll-Druck der Kupplungen als Funktion über der Zeit aus einer Kennlinie oder aus einem funktionalen Zusammenhang gewonnen.

Bei der Bestimmung des Druckes der Kupplungen werden außerdem Abhängigkeiten von der Temperatur, von der Drehzahl des Motors 6 und von der Konstruktion der Kupplung selbst berücksichtigt. Die Druckverläufe der Betätigungsdrücke der Kupplungen sind den unterschiedlichen Fahrzustandsübergängen angepasst, beispielsweise Fahrzeugstillstand, Vorwärtsfahrt oder Rückwärtsfahrt.

Eine weitere Situation, bei der die Kupplungen vor Überhitzung zu schützen sind, ist der Wechsel der Fahrzustände.

Von Neutral oder Fahrzeugstillstand auf Vorwärtsfahrt oder Rückwärtsfahrt:

Bei diesem Übergang wird durch Verstellung der Übersetzung des Getriebes 2 die Differenzdrehzahl zwischen der Antriebsseite und der Abtriebsseite derjenigen Kupplung K_{V} oder K_{R}, die der momentanen Fahrtrichtung entspricht, verringert. Unterschreitet diese Differenzdrehzahl einen Grenzwert, dann wird die betreffende Kupplung zugeschaltet (geschlossen), abhängig von der momentanen Abtriebsdrehzahl. Entspricht diese Abtriebsdrehzahl der gewünschten Fahrtrichtung oder ist sie innerhalb eines Toleranzbandes um Null, dann wird diejenige Kupplung geschlossen, die der gewünschten Fahrtrichtung entspricht; ansonsten die andere Kupplung.

Der Grenzwert für die Drehzahldifferenz ist von der maximalen Reibleistung abhängig, welche an der Kupplung zulässig ist.

Das Zuschalten (Schließen) der Kupplung erfolgt in mehreren Phasen. Zuerst wird die Kupplung mit Hydraulikflüssigkeit gefüllt. Danach erfolgt die Schließphase. Diese Phasen sind zeitlich gesteuert und der Solldruck wird aus einer Kennlinie generiert.

Bei Inchbetrieb wird die zeitlich gesteuerte Schließphase der betreffenden Kupplung in dem Moment beendet, in dem der Solldruck demjenigen Druck entspricht, der durch die Kupplungspedal-Stellung vorgegeben wird. Ab diesem Zeitpunkt wird der hydraulische Betätigungsdruck der betreffenden Kupplung in Abhängigkeit vom Incheffekt moduliert.

Neutral:

Bei einem Wechsel des Fahrzustandes auf "Neutral" werden beide Kupplungen K_{V} und K_{R} gleichzeitig geöffnet. Die Dauer dieser Öffnen-Phase wird aus einer Kennlinie gewonnen.

### Bezugszeichen

- 2: Getriebe mit stufenlos variabler Übersetzung
- 4: Wendekupplungsvorrichtung
- 6: Fahrantriebsmotor
- 8: Kupplungseingangswelle
- 10: Kupplungsausgangswelle
- 11: Wählvorrichtung zur Fahrrichtungsumkehr
- 12: elektronische Steuereinrichtung
- 13: Zahnrad
- 14: Kupplungspedal
- 15: Zahnräder
- 16: Sensor
- 18: Hydraulikvorrichtung
- 19: Sensor
- 20: Regler

## Patentansprüche

1. Verfahren zur Betätigung einer Kraftfahrzeug-Kupplungsvorrichtung (4) und zur Begrenzung, Steuerung oder Regelung der Reibleistung der Kupplungsvorrichtung (4), insbesondere einer Wendekupplungsvorrichtung (4) zur Reversierung der Fahrtrichtung, die in einem Fahrantriebsstrang angeordnet ist, welcher ein Getriebe (2) mit stufenlos variabler Übersetzung enthält, wobei die Reibleistung und Temperatur der Kupplungsvorrichtung (4) durch eine automatische Steuerung oder Regelung in Abhängigkeit von einem oder mehreren Parametern automatisch beeinflusst wird, **dadurch gekennzeichnet,**
**daß** die stufenlos variable Übersetzung des Getriebes (2) automatisch derart eingestellt wird, daß eine parametrierbare maximale Drehzahldifferenz zwischen der Antriebsseite (m₁) und der Abtriebsseite (m₂) der Kuplungsvorrichtung (4) nicht überschritten wird, oder
**daß** die stufenlos variable Übersetzung des Getriebes automatisch derart variiert wird, daß die Drehzahldifferenz zwischen Antriebsseite (m₁) und Abtriebsseite (m₂) der Kupplungsvorrichtung (4) einem parametrierbaren festen oder variablen Sollwert oder Sollwertbereich entspricht, oder
**daß** die Reibleistung in der Kupplungs-vorrichtung (4) automatisch laufend berechnet wird und daß, wenn die Reibleistung einen parametrierbaren Wert überschreitet, die Übersetzung des Getriebes (2) automatisch so verändert wird, daß die Drehzahldifferenz zwischen Antriebsseite (m₁) und Abtriebsseite (m₂) der Kupplungsvorrichtung (4) entsprechend verringert und somit die Reibleistung entsprechend gesenkt wird.

2. Verfahren nach Anspruch 1, **dadurch gekennzeichnet, daß** die Reibleistung mit Hilfe der Drehzahldifferenz zwischen Antriebsseite (m₁) und Abtriebsseite (m₂) der Kupplungsvorrichtung (4), mit Hilfe des Kupplungs-Betätigungsdruckes der Kupplungsvorrichtung und mit Hilfe von spezifischen physikalischen konstanten Werten der Kupplungsvorrichtung automatisch berechnet wird.

3. Verfahren nach einem der vorhergehenden Ansprüche, **dadurch gekennzeichnet, daß** die automatische Beeinflussung der Reibleistung der Kupplungsvorrichtung (4), welche durch entsprechendes Variieren der Übersetzung des Getriebes (2) erfolgt, einem an einem Kupplungspedal (14) vorgegebenen Kupplungsdruck überlagert wird.

4. Verfahren nach einem der vorhergehenden Ansprüche, **dadurch gekennzeichnet, daß** der hydraulische Betätigungsdruck der Kupplungsvorrichtung (4) von Null bis zu einem Maximalwert automatisch und stufenlos in Abhängigkeit vom Übersetzungsverhältnis des Getriebes (2) und in Abhängigkeit von momentanen Fahrsituationen moduliert wird.

5. Verfahren nach einem der vorhergehenden Ansprüche, **dadurch gekennzeichnet, daß** die Übersetzung des Getriebes (2) in Abhängigkeit von der Temperatur der Kupplungsvorrichtung (4) automatisch variiert wird.

## Claims

1. Method for operating a motor vehicle clutch device (4) and for limiting, controlling or regulating the friction power of the clutch device (4), in particular of a reversing clutch device (4) for reversing the direction of travel, which device is disposed in a travelling drive train containing a transmission (2) with a continuously variable transmission ratio, wherein the friction power and the temperature of the clutch device (4) are automatically influenced by an automatic control or regulation in accordance with one or more parameters, **characterised in that** the continuously variable transmission ratio of the transmission (2) is automatically set such that a parameterisable maximum speed difference between the driving side (n₁) and the driven side (n₂) of the clutch device (4) is not exceeded, or
that the continuously variable transmission ratio of the transmission is automatically varied such that the speed difference between the driving side (n₁) and the driven side (n₂) of the clutch device (4) corresponds to a parameterisable fixed or variable desired value or desired value range, or
that the friction power in the clutch device (4) is automatically and constantly calculated, and that, if the friction power exceeds a parameterisable value, the transmission ratio of the transmission (2) is automatically changed such that the speed difference between the driving side (n₁) and the driven side (n₂) of the clutch device (4) is reduced accordingly and the friction power thus decreased accordingly.

2. Method according to Claim 1, **characterised in that** the friction power is automatically calculated by means of the speed difference between the driving side (n₁) and the driven side (n₂) of the clutch device (4), by means of the clutch operating pressure of the clutch device and by means of specific physical constant values of the clutch device.

3. Method according to either of the preceding Claims, **characterised in that** the automatic influence of the friction power of the clutch device (4), which is effected by appropriately varying the transmission ratio of the transmission (2), is superimposed on a clutch pressure which is predetermined at a clutch pedal (14).

4. Method according to any one of the preceding Claims, **characterised in that** the hydraulic operating pressure of the clutch device (4) is automatically and continuously modulated from zero to a maximum value in accordance with the transmission ratio of the transmission (2) and in accordance with instantaneous driving situations.

5. Method according to any one of the preceding Claims, **characterised in that** the transmission ratio of the transmission (2) is automatically varied in accordance with the temperature of the clutch device (4).

## Revendications

1. Procédé pour actionner un dispositif d'embrayage (4) de véhicule automobile et pour limiter, commander ou régler la puissance de frottement du dispositif d'embrayage (4), en particulier d'un dispositif d'embrayage d'inversion (4) destiné au renversement du sens de marche, qui est disposé dans une chaîne cinématique de conduite qui comprend une transmission (2) à rapport réglable en continu, la puissance de frottement et la température du dispositif d'embrayage (4) étant influencées automatiquement par une commande ou une régulation automatique en fonction d'un ou de plusieurs paramètres, **caractérisé**
**en ce que** le rapport variable en continu de la transmission (2) est réglé automatiquement de telle manière qu'une différence de vitesse de rotation maximale paramétrable entre le côté d'entrée (n₁) et le côté de sortie (n₂) du dispositif d'embrayage (4) ne soit pas dépassée, ou
**en ce que** le rapport variable en continu de la transmission est modifié automatiquement de telle manière que la différence de vitesse de rotation entre le côté d'entrée (n₁) et le côté de sortie (n₂) du dispositif d'embrayage (4) corresponde à une valeur de consigne ou une plage de valeurs de consigne fixe ou variable, paramétrable, ou
**en ce que** la puissance de frottement dans le dispositif d'embrayage (4) est calculée automatiquement en permanence et en ce que, si la puissance de frottement devient supérieure à une valeur paramétrable, le rapport de la transmission (2) est modifié automatiquement de telle manière que la différence de vitesse de rotation entre le côté d'entrée (n₁) et le côté de sortie (n₂) du dispositif d'embrayage (4) est réduite de façon correspondante et que, de cette façon, la puissance de frottement est abaissée de façon correspondante.

2. Procédé selon la revendication 1, **caractérisé en ce que** la puissance de frottement est calculée automatiquement à l'aide de la différence de vitesse de rotation entre le côté d'entrée (n₁) et le côté de sortie (n₂) du dispositif d'embrayage (4), à l'aide de la pression d'actionnement d'embrayage du dispositif d'embrayage et à l'aide de valeurs constantes physiques spécifiques du dispositif d'embrayage.

3. Procédé selon l'une des revendications précédentes, **caractérisé en ce que** l'influence automatique sur la puissance de frottement du dispositif d'embrayage (4), qui est exercée par une modification correspondante du rapport de la transmission (2), est superposée à une pression d'embrayage prescrite au niveau d'une pédale d'embrayage (14).

4. Procédé selon l'une des revendications précédentes, **caractérisé en ce que** la pression d'actionnement hydraulique du dispositif d'embrayage (4) est modulée automatiquement et par variation continue, de zéro à une valeur maximale, en fonction du rapport de transmission de la transmission (2) et en fonction de situations momentanées de la conduite.

5. Procédé selon l'une des revendications précédentes, **caractérisé en ce que** le rapport de la transmission (2) est modifié automatiquement en fonction de la température du dispositif d'embrayage (4).
